# NOUVEAU FASCICULE DE BREVET EUROPEEN

(11) **EP 1 623 131 B2**
(45) Date de publication et mention de la décision concernant l'opposition: **30.07.2014**
(45) Mention de la délivrance du brevet: 04.11.2009
(21) Numéro de dépôt: 04742865.1
(22) Date de dépôt: 12.05.2004
(51) Int. Cl.: F16D 48/06

(54) **DISPOSITIF ADAPTATIF PILOTE D'ACCOUPLEMENT ENTRE UN MOTEUR ET UNE BOITE DE VITESSES DANS UN VEHICULE AUTOMOBILE**
ADAPTIVE STEUERVORRICHTUNG FÜR EINE KUPPLUNG ZWISCHEN MOTOR UND GETRIEBE IN EINEM KRAFTFAHRZEUG
CONTROLLED ADAPTIVE DEVICE FOR COUPLING AN ENGINE AND A GEARBOX IN A MOTOR VEHICLE

(30) Priorité: 14.05.2003 FR 0305783; 09.12.2003 FR 0351012
(43) Date de publication de la demande: 08.02.2006
(73) Titulaire: Valeo Embrayages, 80009 Amiens (FR)
(72) Inventeur: MAUREL, Pascal, F-75009 Paris (FR); HOFFMANN, Christian, F-75014 Paris (FR)
(74) Mandataire: Ramey, Daniel
(86) Numéro de dépôt international: PCT/FR2004/050188
(87) Numéro de publication internationale: WO 2004/102022

(56) Documents cités:
- WO-A-03/019029
- DE-A- 19 504 847
- US-A1- 2002 042 325
- US-A1- 2003 134 713

## Description

L'invention concerne un dispositif adaptatif piloté d'accouplement entre un moteur et une boîte de vitesses dans un véhicule automobile.

Un tel dispositif comprend un moyen d'accouplement entre l'arbre de sortie du moteur à combustion interne du véhicule automobile et un arbre d'entrée de la boîte de vitesses qui peut être du type mécanique à plusieurs rapports de transmission avec ou sans robotisation des changements de rapports.

Le moyen d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques.

L'actionneur de commande de l'embrayage agit sur la position d'un organe mobile de cet embrayage, tel par exemple que la butée d'embrayage, qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage. L'actionneur peut aussi agir directement sur la charge appliquée sur le plateau de pression par une liaison mécanique ou hydraulique par exemple. La commande automatisée de l'embrayage doit prendre en compte un grand nombre de grandeurs physiques, de grandeurs d'état et de grandeurs de commande qui sont mesurées ou estimées sur le moteur, sur la boîte de vitesses et sur le reste du véhicule, et de signaux représentant la volonté du conducteur, l'adaptation du comportement de la transmission au style de conduite du conducteur, l'état dynamique du véhicule et l'état du dispositif de commande (initialisation, mode normal, mode dégradé, apprentissage, arrêt, ...) etc.

On a déjà proposé dans les documents DE19504847A et WO03/019029A de commander l'embrayage pour lui faire transmettre un couple désiré, mais le couple transmis par l'embrayage varie de façon non linéaire en fonction de la pression ou de la position d'un organe de commande de l'embrayage, tel que la butée d'embrayage par exemple, il varie d'un embrayage à l'autre en raison des dispersions de fabrication, et il varie aussi en fonction d'un certain nombre de paramètres tels que la température, l'état des garnitures et des surfaces de friction du mécanisme d'embrayage, etc...

Il est donc extrêmement difficile, voire impossible de commander l'embrayage de façon correcte pour lui faire transmettre un couple désiré qui a été déterminé par des moyens de calcul et de traitement de l'information.

Un dispositif selon le préambule de la revendication 1 est connu de US 2002/0042325 A1.

La présente invention propose une solution à ce problème qui consiste à piloter l'embrayage de façon linéaire en couple transmissible au moyen d'un dispositif de commande partagé en plusieurs modules de pilotage qui sont destinés à compenser en cascade les dispersions des divers composants de la transmission du véhicule et qui comprennent :
- un module de supervision de la transmission mettant en oeuvre des stratégies de gestion de l'agrément de conduite qui pilotent l'embrayage en couple et le moteur du véhicule en vitesse et/ou en couple et qui sont destinées à compenser la variabilité du comportement dynamique du moteur, de la boîte de vitesses et du reste du véhicule, notamment des composants de la transmission reliés aux roues motrices du véhicule,
- un module de pilotage de l'embrayage en couple qui permet de déterminer, entre autres, une bonne valeur de consigne d'une grandeur physique de commande interne ou externe de l'embrayage pour obtenir un couple transmissible souhaité dans l'embrayage en fonction d'une consigne de couple à transmettre, délivrée par le module de supervision de la transmission, et de divers signaux de grandeurs physiques, d'état ou de commande qui sont mesurées sur le moteur, sur la boîte de vitesses et sur le reste du véhicule,
- et un module de pilotage d'un actionneur de l'embrayage, qui permet de commander l'actionneur pour obtenir une grandeur physique de commande interne ou externe de l'embrayage en fonction d'une consigne fournie par le module de pilotage en couple de l'embrayage et de divers signaux de grandeurs physiques, d'état ou de commande qui sont mesurées sur le moteur, sur la boîte de vitesses et sur le reste du véhicule.

Ainsi, l'actionneur et son module de pilotage sont vus comme à peu près parfaits par le module de pilotage en couple de l'embrayage, et l'embrayage et son module de pilotage sont eux-mêmes vus comme à peu près parfaits par le module de supervision qui gère les stratégies de pilotage de l'embrayage et du moteur en tenant compte du comportement dynamique du moteur, de la boîte de vitesses et du reste du véhicule.

En partageant ce dispositif de commande en trois modules qui compensent chacun des variabilités de comportement d'éléments ou d'organes différents, on améliore les performances globales du dispositif et on tient davantage compte des variations des paramètres représentatifs de l'état ou de la commande des divers composants de la transmission du véhicule.

Le module de pilotage de l'actionneur comprend des moyens correcteurs qui déterminent une valeur de commande de l'actionneur permettant d'annuler dans un minimum de temps l'écart entre la valeur de consigne déterminée par le module de pilotage de l'embrayage et une mesure de la grandeur physique de commande de l'embrayage, et des moyens d'ajustement des paramètres des moyens correcteurs en fonction de variations de grandeurs physiques d'environnement telles que la température et/ou une tension électrique d'alimentation ou de phénomènes tels que le vieillissement et l'usure des composants de l'actionneur et de la commande de l'embrayage.

Un tel module de pilotage de l'actionneur permet de compenser les variations de comportement de l'actionneur et de la commande de l'embrayage, qui sont dues à des variations de grandeurs physiques telles par exemple que la température et une tension d'alimentation et aux effets de l'usure et du vieillissement des organes internes de l'actionneur et de la commande de l'embrayage, tous ces phénomènes modifiant les réponses statiques et dynamiques de l'actionneur et de la commande de l'embrayage.

Le module de pilotage en couple de l'embrayage n'a donc pas à corriger les écarts de réponse du système formé par l'actionneur et la commande de l'embrayage, ce qui se traduit par une augmentation de ses performances.

Dans le module de pilotage de l'actionneur, les moyens correcteurs comprennent des moyens de filtrage et de mise à l'échelle de la valeur de consigne fournie par le module de pilotage en couple de l'embrayage et de la mesure de la grandeur physique de commande de l'embrayage, ces moyens de filtrage et de mise à l'échelle étant reliés à un comparateur déterminant l'écart entre la valeur de consigne et la mesure, et un adaptateur recevant le signal d'écart fourni par le comparateur et le modifiant en fonction des signaux de sortie des moyens d'ajustement précités.

Les moyens correcteurs du module de pilotage de l'actionneur comprennent également des moyens de calcul d'un pré-positionnement ou d'une anticipation du signal de commande de l'actionneur, ces moyens de calcul recevant la valeur de consigne précitée et les signaux de sortie des moyens d'ajustement et générant un pré-positionnement ou une anticipation de commande qui est ajouté au signal de sortie de l'adaptateur précité.

Ce pré-positionnement ou cette anticipation permet de positionner directement la commande de l'actionneur avec une grande rapidité.

Le signal résultant de l'addition du pré-positionnement ou de l'anticipation et du signal de sortie de l'adaptateur est appliqué à un circuit de mise à l'échelle dont le signal de sortie constitue le signal de commande de l'actionneur, et les paramètres des moyens de filtrage et de mise à l'échelle des moyens correcteurs sont ajustés par les moyens d'ajustement précités qui reçoivent en entrée des mesures de grandeurs physiques affectant la réponse dynamique et la précision de l'actionneur, la mesure de la grandeur physique de commande de l'embrayage et le signal de commande de l'actionneur.

Ces moyens d'ajustement comprennent des moyens de calcul des paramètres d'un modèle mathématique de l'actionneur en fonction de valeurs mesurées des grandeurs physiques, d'état et de commande de l'embrayage et de l'actionneur, et des moyens d'adaptation des paramètres des composants des moyens correcteurs au comportement réel de l'actionneur.

Dans une forme de réalisation préférée, ces moyens d'ajustement comprennent une mémoire dans laquelle sont enregistrées des tables de valeurs des paramètres des composants des moyens correcteurs précités, et des moyens de sélection dans ces tables des valeurs de paramètres les mieux adaptées au comportement dynamique réel de l'actionneur, et/ou des formules de calcul de ces paramètres.

L'invention s'applique également, bien entendu, à la commande de l'accouplement entre l'arbre de sortie d'un moteur de véhicule et une boîte de vitesses robotisée qui comprend deux arbres d'entrée en parallèle reliés chacun par un embrayage à l'arbre de sortie du moteur du véhicule.

Dans ce cas, chaque embrayage est commandé par un actionneur commandé lui-même par un module de pilotage d'actionneur et par un module de pilotage en couple de l'embrayage.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est un schéma fonctionnel d'un véhicule équipé d'un dispositif selon l'invention dans le cas d'une boîte de vitesses à un seul arbre d'entrée ;
- la figure 2 est un schéma fonctionnel d'un véhicule équipé d'une variante de réalisation du dispositif selon l'invention dans le cas d'une boîte de vitesses robotisée à deux arbres d'entrée parallèles ;
- la figure 3 est une représentation schématique des caractéristiques essentielles du dispositif selon l'invention ;
- la figure 4 représente schématiquement un module de pilotage de l'actionneur de l'embrayage.

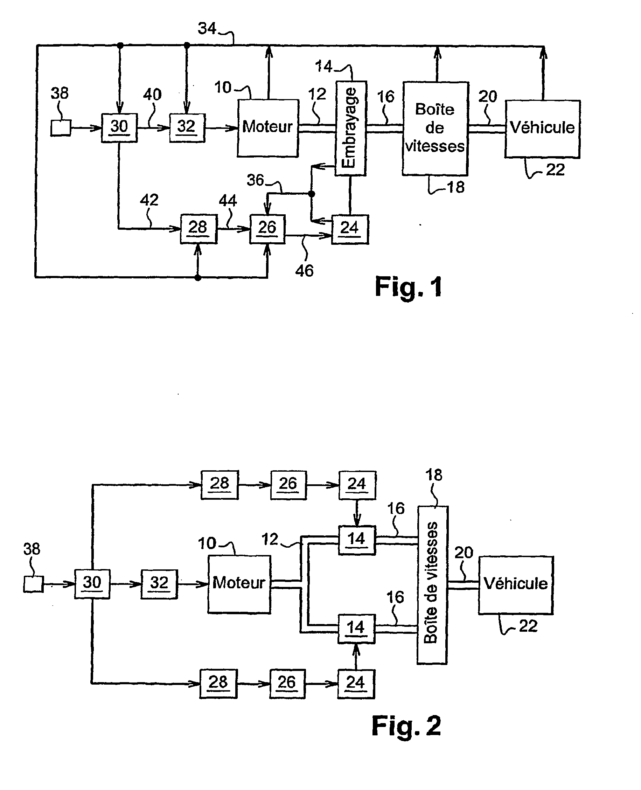

On a représenté schématiquement en figure 1 un véhicule automobile équipé d'un dispositif selon l'invention, la référence 10 désignant un moteur à combustion interne dont l'arbre de sortie 12 est relié par un embrayage 14 à l'arbre d'entrée 16 d'une boîte de vitesses par exemple robotisée 18 qui est du type mécanique à plusieurs rapports de transmission et dont l'arbre de sortie 20 est relié à des roues motrices du véhicule 22.

L'embrayage 14 est commandé par un actionneur 24, qui agit par exemple sur la position d'une butée d'embrayage. D'une façon bien connue de l'homme du métier, cette butée d'embrayage agit elle-même sur des doigts radiaux d'un diaphragme annulaire qui est porté par un couvercle d'embrayage et qui agit axialement sur un plateau de pression de l'embrayage pour le serrage des garnitures de friction d'un disque relié en rotation à l'arbre d'entrée 16 de la boîte de vitesses. Il peut s'agir aussi d'un embrayage ouvert au repos, l'actionneur réalisant le serrage des garnitures par un moyen mécanique ou hydraulique.

Les garnitures peuvent travailler à sec ou dans l'huile.

L'actionneur 24 est d'un type quelconque, par exemple à moteur électrique, à vérin hydraulique, ou autre.

Le dispositif selon l'invention comprend un module 26 de pilotage de l'actionneur 24, ce module 26 recevant un signal de consigne généré par un module 28 de pilotage de l'embrayage en couple, ce module 28 recevant un signal de consigne de couple transmissible par l'embrayage fourni par un module 30 de supervision de la transmission qui fournit également des signaux de pilotage et de consigne à un système 32 de pilotage du moteur 10 du véhicule.

Des informations 34 en provenance du véhicule, du moteur et/ou du système de pilotage 32, et de la boîte de vitesses, par exemple telles que la vitesse de rotation du moteur, le couple fourni par le moteur, la quantité de carburant, la quantité d'air, le rapport de transmission utilisé, la température ambiante, la température du liquide de refroidissement, la vitesse du véhicule, la vitesse de rotation de l'arbre d'entrée de la boîte de vitesses, la vitesse des roues du véhicule, la tension électrique fournie par la batterie du véhicule, etc... sont appliquées au module 26 de pilotage de l'actionneur, au module 28 de pilotage de l'embrayage en couple, au module 30 de supervision de la transmission et au système 32 de pilotage du moteur du véhicule.

Des informations 36 relatives à l'actionneur 24 et à l'embrayage 14, telles que des valeurs d'effort, de pression, de position d'un organe mobile de l'actionneur, de position de la butée d'embrayage, de tension électrique, d'intensité de courant électrique, de température, etc..., sont appliquées à des entrées du module 26 de pilotage de l'actionneur.

Des informations 38 appliquées à des entrées du module de supervision de la transmission 30 comprennent des signaux de gestion et d'adaptation de stratégies de pilotage de la transmission, relatives au fonctionnement du véhicule, aux intentions du conducteur, au mode automatique de commande de la transmission, à l'adaptabilité du comportement de la transmission, à des niveaux de confort et de performance, etc...

Le module 30 de supervision de la transmission génère, à partir de ces informations et de stratégies de gestion enregistrées en mémoire, des signaux 40 de pilotage et/ou de consigne qui sont appliqués au système 32 de pilotage du moteur 10, et des signaux 42 de consigne appliqués au module 28 de pilotage en couple de l'embrayage 14, les signaux 42 comprenant un signal de consigne de couple transmissible par l'embrayage 14.

Le module 28 de pilotage de l'embrayage recevant ces signaux 42 et les informations 34 fournies par le moteur 10, la boîte de vitesses 18 et le reste du véhicule 22, génère un signal 44 de commande du module 26 de pilotage de l'actionneur 24, le signal 44 étant un signal de consigne du paramètre de commande de l'embrayage 14 tel par exemple que la position de la butée d'embrayage.

Le module 26 de pilotage de l'actionneur 24 reçoit ce signal de consigne 44, les informations 34 fournies par le moteur 10, la boîte de vitesses 18 et le reste du véhicule 22 et des informations 36 relatives à l'embrayage 14 et à son actionneur 24 et génère un signal 46 de commande de l'actionneur 24.

Dans la variante de réalisation représentée en figure 2, on retrouve sensiblement les mêmes composants et modules que dans le mode de réalisation de la figure 1, la différence étant que la boîte de vitesses 18 comprend deux arbres d'entrée 16 parallèles, reliés chacun par un embrayage 14 à l'arbre de sortie 12 du moteur 10, chaque embrayage étant commandé par son actionneur 24 commandé lui-même par un module de pilotage 26 du type précité et par un module 28 de pilotage en couple de l'embrayage correspondant.

Les deux modules 28 de pilotage en couple sont commandés par un même module 30 de supervision de la transmission qui commande également le système de pilotage du moteur 10.

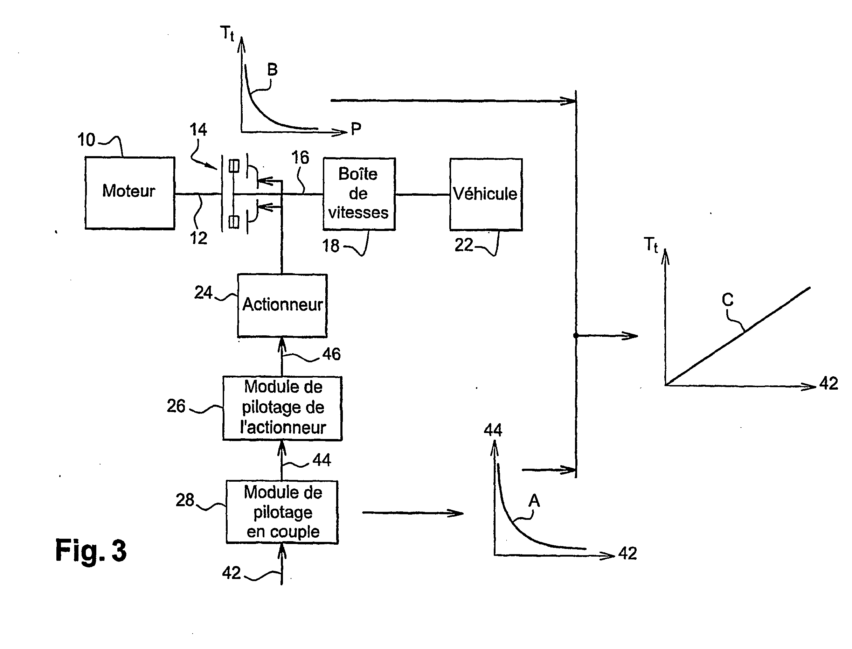

La figure 3 est une illustration schématique des caractéristiques essentielles du dispositif selon l'invention.

Le module de pilotage en couple 28, qui reçoit un signal 42 de consigne de couple transmissible par l'embrayage et qui génère un signal 44 de consigne d'un paramètre de commande appliqué au module 26 de pilotage de l'actionneur, génère ce signal à partir d'une courbe apprise A qui est une courbe de variation du signal de consigne du paramètre de commande de l'embrayage 14 en fonction du signal 44, c'est-à-dire du couple transmissible désiré. Cette courbe A est l'inverse de la courbe B de variation du couple Tt qui est transmis par l'embrayage en fonction de son paramètre de commande P, qui est par exemple la position de la butée d'embrayage.

On voit que la courbe B n'est pas une variation linéaire du paramètre de commande P et que sa pente varie entre ses extrémités d'une valeur faible à une valeur élevée. En outre, la courbe B varie d'un véhicule à l'autre en raison des dispersions de fabrication des composants de l'embrayage, elle varie également en fonction du temps, en raison des variations de température de ses composants, de leur degré d'usure, des caractéristiques des composants du mécanisme d'embrayage, etc...

L'avantage essentiel du dispositif selon l'invention est de linéariser la commande de l'embrayage grâce à l'utilisation dans le module de pilotage 28 d'une courbe caractéristique A qui est l'inverse de la courbe caractéristique B de fonctionnement de l'embrayage. Cette combinaison en série des deux courbes caractéristiques permet d'obtenir, comme représenté en partie droite de la figure 3, une caractéristique C de variation linéaire du couple Tt transmis par l'embrayage en fonction du couple transmissible désiré, c'est-à-dire du signal 42 de consigne de couple transmissible par l'embrayage.

Le pilotage du confort, représenté par la courbe du couple ou de l'accélération lors de la manoeuvre de l'embrayage, est ainsi plus simple, plus performante et réalisable en temps réel.

La courbe caractéristique A utilisée par le module 28 de pilotage en couple est une courbe apprise, déterminée par calcul à partir de valeurs mesurées ou estimées du couple transmis Tt et du paramètre de commande P et d'un modèle mathématique simple de la courbe caractéristique, ce qui permet de suivre l'évolution de cette courbe caractéristique et de prendre en compte les variations des paramètres qui la déterminent.

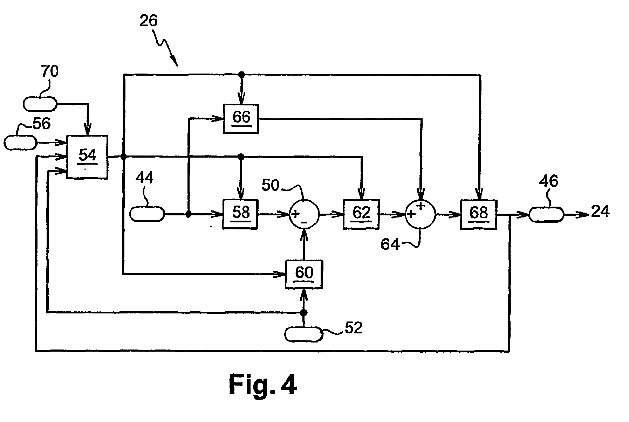

Un mode de réalisation du module 26 de pilotage de l'actionneur 24 est représenté schématiquement en figure 4.

La réponse dynamique et la précision de l'actionneur sont affectées par des grandeurs physiques telles que la température, la tension électrique d'alimentation, et les effets de l'usure et du vieillissement des composants internes de l'actionneur et de la commande de l'embrayage de la commande 14.

La variabilité engendrée par l'actionneur imposerait au module 28 de pilotage en couple de corriger les écarts de réponse du système complet, ce qui diminuerait les performances de régulation de ce module.

Le module 26 de pilotage en couple de l'actionneur est chargé de compenser les variations du processus physique d'actionnement et de commande de l'embrayage.

Le module 28 de pilotage de l'embrayage fournit un signal 44 de consigne de la grandeur physique de commande de l'embrayage, qui est comparé par un comparateur 50 à une mesure ou une estimation 52 de cette grandeur physique, obtenue à partir de mesures sur l'embrayage 14.

Des moyens correcteurs décrits en détail dans ce qui suit permettent de déterminer la meilleure valeur du signal 46 de commande de l'actionneur pour annuler l'écart entre la consigne 44 et la mesure 52 en minimisant le temps pris par l'actionneur pour annuler cet écart.

Les paramètres des moyens correcteurs du module 26 sont ajustés par des moyens 54 qui prennent en compte le vieillissement de l'actionneur et de l'embrayage, les dispersions de fabrication et les variations des grandeurs physiques d'environnement 56 qui sont susceptibles de perturber le fonctionnement de l'actionneur 24 et de l'embrayage.

Plus précisément, le module 26 représenté en figure 4 comprend des moyens 58 de mise à l'échelle et de filtrage du signal 44 de consigne, la sortie des moyens 58 étant appliquée à une entrée du comparateur 50 dont une autre entrée reçoit la valeur mesurée 52 de la grandeur physique de commande de l'embrayage après traitement par des moyens 60 de mise à l'échelle et de filtrage.

La sortie du comparateur 50 est reliée à une entrée de moyens adaptateurs 62 dont une autre entrée est reliée à une sortie des moyens d'ajustement 54. La sortie des moyens adaptateurs 62 est reliée à une entrée d'un sommateur 64 dont une autre entrée reçoit un signal de sortie de moyens 66 de pré-positionnement ou d'anticipation de la valeur du signal de commande de l'actionneur 24 en fonction du signal de consigne 44 fourni par le module 28 de pilotage en couple de l'embrayage.

Le pré-positionnement consiste pour l'essentiel à déterminer à partir d'une valeur actuelle une commande permettant d'arriver très vite au voisinage d'une valeur finale, tandis que l'anticipation consiste à déterminer une commande à partir des variations précédentes d'une valeur, c'est-à-dire à partir des dérivées de cette valeur.

La sortie du sommateur 64 est reliée à des moyens 68 de mise à l'échelle pour fournir un signal 46 de commande de l'actionneur 24, qui est également appliqué à une entrée des moyens d'ajustement 54, ainsi que la mesure 52 de la grandeur physique de commande de l'embrayage.

Des signaux de contrôle 70 nécessaires sont également appliqués à une entrée des moyens d'ajustement 54

Le signal de sortie des moyens 66 de pré-positionnement ou d'anticipation est ajouté à la sortie des moyens adaptateurs 62 par le sommateur 64, ce pré-positionnement ou cette anticipation permettant de positionner la commande de l'actionneur 24 avec une grande rapidité.

Les moyens adaptateurs 62 servent à adapter la valeur de la commande pour compenser des erreurs de modèle, des perturbations et des dispersions.

Par exemple, quand l'actionneur 24 est un vérin électromécanique qui déplace une butée d'embrayage et qui est commandé par un moteur électrique piloté en courant, les moyens de pré-positionnement ou d'anticipation 66 permettent de fournir une consigne de courant minimum pour déplacer la butée d'embrayage en fonction de la consigne de position de butée à atteindre au lieu d'attendre qu'un intégrateur des moyens adaptateurs 62 monte lentement à la bonne valeur.

Quand l'actionneur 24 est un distributeur de fluide commandé par une électrovanne, les moyens de pré-positionnement ou d'anticipation 66 permettent d'appliquer une tension électrique plus importante pour commander l'ouverture de l'électrovanne plus rapidement, les moyens adaptateurs 62 venant corriger le débit ou la pression du fluide pour atteindre ou maintenir la position souhaitée de la butée d'embrayage.

Les moyens de mise à l'échelle 58, 60, 68 et des moyens de mise à l'échelle faisant partie des moyens de pré-positionnement ou d'anticipation 66 peuvent présenter un gain et un décalage variables qui sont déterminés par les moyens d'ajustement 54 pour adapter la résolution de la valeur de consigne 44, c'est-à-dire le nombre de points disponibles dans le domaine de variation de la grandeur physique de commande de l'embrayage. Par exemple, dans le cas de la commande d'un embrayage à sec, la course utile définie entre la position embrayée et le point de léchage (position de contact entre la friction et le plateau où l'embrayage commence à transmettre un couple non nul) varie dans le temps avec l'usure de l'embrayage. Le point de léchage est déterminé par apprentissage. L'ajustement du gain et du décalage de la mise à l'échelle de la valeur de consigne 44 permet d'ajuster le domaine de variation de la consigne de position de la butée d'embrayage à la course utile, afin d'utiliser toujours la résolution maximale quel que soit l'état d'usure de l'embrayage.

Les moyens d'anticipation 66 comprennent également des moyens de filtrage, formés par exemple d'une fonction de transfert numérique comportant des matrices de paramètres qui dépendent de la nature du processus physique de l'actionnement de l'embrayage au moyen de l'actionneur 24. Les moyens d'ajustement 54 permettent de modifier les paramètres de la fonction de transfert numérique des moyens de pré-positionnement ou d'anticipation 66 en fonction de la réponse dynamique de l'actionneur, ce qui garantit une adéquation optimale entre l'état d'usure de l'actionneur, les valeurs 56 des grandeurs perturbatrices et la réponse dynamique souhaitée de l'actionneur 24.

De même, la mise à l'échelle de la valeur de consigne 44 par les moyens 58 précités peut être variable en fonction du domaine utile de variation de la valeur de consigne 44 et les paramètres d'un filtre numérique des moyens 58 peuvent être recalculés par les moyens d'ajustement 54 comme indiqué plus haut.

Il en va de même en ce qui concerne les moyens 60 de mise à l'échelle et de filtrage de la mesure 52 de la grandeur physique de commande de l'embrayage.

Les moyens adaptateurs 62 peuvent également comprendre un filtre numérique dont les paramètres sont réglés par les moyens d'ajustement 54 en fonction de la dynamique observée du fonctionnement physique de l'actionneur 24 et des valeurs 56 des grandeurs perturbatrices.

Les moyens 54 d'ajustement des paramètres des composants du module 26 utilisent un modèle mathématique de l'actionneur 24 et comprennent des moyens de calcul permettant de déterminer tous les paramètres de ce modèle mathématique. Cela permet ensuite de calculer les paramètres des composants du module 26 pour les adapter parfaitement à la dynamique du fonctionnement physique réel de l'actionneur 24.

La détermination des paramètres du modèle mathématique de l'actionneur est effectuée de façon régulière, par exemple en fonction du nombre de cycles d'embrayage et de débrayage. On peut prévoir de limiter la variation des paramètres de ce modèle par des seuils calibrables à l'intérieur de domaines bornés avec des bornes calibrables.

On peut également, en partant d'un type donné de moyens correcteurs dans le module 26, déterminer au préalable des tables de valeurs des paramètres des composants de ces moyens correcteurs et sélectionner dans ces tables les valeurs définissant des moyens correcteurs les mieux adaptés à l'état ou au comportement réel de l'actionneur.

Les valeurs des variables d'état qui constituent les fonctions de transfert peuvent être initialisées à des valeurs pertinentes, calculées et/ou déterminées à partir de formules et/ou de tables suivant l'observation du comportement dynamique réel de l'actionneur à partir des grandeurs physiques mesurées.

## Revendications

1. Dispositif adaptatif piloté d'accouplement entre un moteur et une boîte de vitesses dans un véhicule automobile, ce dispositif comprenant un embrayage (14), un actionneur (24) de commande de l'embrayage et des moyens de commande de l'actionneur (24) comprenant un module (30) de supervision de la transmission mettant en oeuvre des stratégies de gestion de l'agrément de conduite qui pelotent l'embrayage en couple et le moteur en vitesse et/ou en couple, de façon à compenser la variabilité du comportement dynamique du moteur, de la boîte de vitesses et du reste du véhicule, le module de supervision (30) générant un signal (40) de pilotage et/ou de consigne de moyens (32) de commande du moteur, et un signal (42) de consigne de couple à transmettre, un module (28) de pilotage de l'embrayage en couple qui détermine une valeur de consigne (44) d'une grandeur physique de commande de l'embrayage à partir de la consigne de couple à transmettre (42) fournie par le module de supervision (30) et de grandeurs physiques mesurées sur le moteur, la boîte de vitesses et le reste du véhicule, **caractérisé en ce que** le dispositif comprend un module (26) de pilotage de l'actionneur (24) de l'embrayage, recevant la valeur de consigne (44) déterminée par le module (28) de pilotage de l'embrayage et des signaux (34) mesurés sur le moteur, la boîte de vitesses et le reste du véhicule et générant un signal (46) de commande de l'actionneur (24), et **en ce que** le module (26) de pilotage de l'actionneur comprend des moyens correcteurs (50, 58, 62, 64, 66, 68) qui déterminent une valeur du signal (46) de commande de l'actionneur permettant d'annuler dans un minimum de temps l'écart entre la valeur de consigne (44) de la grandeur physique de la commande de l'embrayage et une mesure (52) de cette grandeur physique, et des moyens (54) d'ajustement des paramètres des moyens correcteurs en fonction de variations de grandeurs physiques (56) d'environnement telles que la température et/ou une tension électrique d'alimentation et de phénomènes tels que le vieillissement et l'usure de l'actionneur et de la commande de l'embrayage.

2. Dispositif selon la revendication 1, **caractérisé en ce que** les moyens correcteurs comprennent des moyens (58, 60) de filtrage et de mise à l'échelle de la valeur de consigne (44) et de la mesure (52) de la grandeur physique de commande de l'embrayage, qui sont reliés à un comparateur (50) déterminant l'écart entre la valeur de consigne (44) et la mesure (52), et des moyens adaptateurs (62) recevant le signal d'écart fourni par le comparateur (50) et le modifiant en fonction des signaux de sortie des moyens d'ajustement (54) précités.

3. Dispositif selon la revendication 2, **caractérisé en ce que** les moyens correcteurs comprennent également des moyens (66) de calcul d'un pré-positionnement ou d'une anticipation du signal (46) de commande de l'actionneur (24), ces moyens de calcul (66) étant reliés en entrée aux moyens d'ajustement (54) précités et recevant la valeur de consigne (44) pour générer un pré-positionnement ou une anticipation de commande qui est ajouté au signal de sortie des moyens adaptateurs (62) précités.

4. Dispositif selon la revendication 3, **caractérisé en ce que** les moyens correcteurs comprennent des moyens (68) de mise à l'écuelle recevant en entrée le signal résultant de l'addition du pré-positionnement ou de l'anticipation et du signal de sortie des moyens adaptateurs (62) et générant le signal (46) de commande de l'actionneur (24).

5. Dispositif selon l'une des revendications 2 à 4, **caractérisé en ce que** les paramètres des moyens de filtrage et de mise à l'échelle (58, 60, 68) des moyens correcteurs sont définis par les moyens (54) précités.

6. Dispositif selon l'une des revendications 1 à 5, **caractérisé en ce que** les moyens d'ajustement (54) reçoivent en entrée des mesures de grandeurs physiques (56) modifiant la réponse dynamique et la précision de l'actionneur (24), la mesure (52) de la grandeur physique de commande de l'embrayage et le signal (46) de commande de l'actionneur (24).

7. Dispositif selon l'une des revendications précédentes, **caractérisé en ce que** les moyens d'ajustement (54) comprennent des moyens de calcul des paramètres d'un modèle mathématique de l'actionneur et des moyens d'adaptation des paramètres des composants des moyens correcteurs au comportement réel de l'actionneur.

8. Dispositif selon la revendication 7, **caractérisé en ce que** les moyens d'ajustement (54) comprennent une mémoire dans laquelle sont enregistrées des tables de valeurs des paramètres des composants des moyens correcteurs précités et des moyens de sélection dans ces tables des valeurs de paramètres définissant des moyens correcteurs les mieux adaptés au comportement réel de l'actionneur (24).

## Patentansprüche

1. Gesteuerte adaptive Kupplungsvorrichtung zwischen einem Motor und einem Getriebe in einem Kraftfahrzeug, wobei diese Vorrichtung eine Kupplung (14), eine Betätigungseinrichtung (24) zur Ansteuerung der Kupplung und Ansteuerungsmittel zum Ansteuern der Betätigungseinrichtung (24) enthält, die ein Modul (30) zur Überwachung der Kraftübertragung umfassen, das Strategien zur Regelung des Fahrkomforts anwendet, welche die Kupplung nach dem Drehmoment und den Motor nach der Drehzahl und/oder nach dem Drehmoment steuern, um die Veränderlichkeit des dynamischen Verhaltens des Motors, des Getriebes und des Rests des Fahrzeugs auszugleichen, wobei das Überwachungsmodul (30) ein Steuerungs- und/oder Sollwertsignal (40) für Mittel (32) zur Ansteuerung des Motors und ein Sollwertsignal (42) für das zu übertragende Drehmoment erzeugt, sowie ein Modul (28) zur Steuerung des Kupplung nach dem Drehmoment, welches einen Sollwert (44) für eine physikalische Größe zur Ansteuerung der Kupplung ausgehend von dem von dem Überwachungsmodul (30) gelieferten Sollwert für das zu übertragende Drehmoment (42) und für physikalische Größen bestimmt, die am Motor, am Getriebe und am Rest des Fahrzeugs gemessen werden, **dadurch gekennzeichnet, dass** die Vorrichtung ein Modul (26) zur Steuerung der Betätigungseinrichtung (24) der Kupplung umfasst, das den durch das Modul (28) zur Steuerung der Kupplung bestimmten Sollwert (44) sowie am Motor, am Getriebe und am Rest des Fahrzeugs gemessene Signale (34) empfängt und ein Signal (46) zur Ansteuerung der Betätigungseinrichtung (24) erzeugt, und dass das Modul (26) zur Steuerung der Betätigungseinrichtung Korrekturmittel (50, 58, 2, 65, 66, 68) aufweist, die einen Wert des Signals (46) zur Ansteuerung der Betätigungseinrichtung bestimmen, der es ermöglicht, in einer minimalen Zeit die Abweichung zwischen dem Sollwert (44) der physikalischen Größe zur Ansteuerung der Kupplung und einem Messwert (52) dieser physikalischen Größe aufzuheben, und Mittel (54) zur Abgleichung der Parameter der Korrekturmittel in Abhängigkeit von Veränderungen von physikalischen Größen (56) der Umgebung umfasst, wie etwa von der Temperatur und/oder von einer elektrischen Anschlussspannung und von Erscheinungen wie Alterung oder Verschleiß der Betätigungseinrichtung und der Kupplungssteuerung.

2. Vorrichtung nach Anspruch 1, **dadurch gekennzeichnet, dass** die Korrekturmittel Mittel (58, 60) zur Filterung und Skalierung des Sollwerts (44) und des Messwerts (52) der physikalischen Größe zur Ansteuerung der Kupplung aufweisen, die mit einem Vergleicher (50) verbunden sind, der die Abweichung zwischen dem Sollwert (44) und dem Messwert (52) bestimmt, und Anpassmittel (62) umfassen, die das durch den Vergleicher (50) gelieferte Abweichungssignal empfangen und in Abhängigkeit von den Ausgangssignalen der vorgenannten Abgleichmittel (54) verändern.

3. Vorrichtung nach Anspruch 2, **dadurch gekennzeichnet, dass** die Korrekturmittel außerdem Mittel (66) zur Berechnung einer Vorpositionierung oder einer Vorwegnahme des Signals (46) zur Ansteuerung der Betätigungseinrichtung (24) umfassen, wobei diese Berechnungsmittel (66) eingangsseitig mit den vorgenannten Abgleichmitteln (54) verbunden sind und den Sollwert (44) empfangen, um eine Vorpositionierung oder Vorwegnahme der Ansteuerung zu erzeugen, die zum Ausgangssignal der vorgenannten Anpassmittel (62) hinzuaddiert wird.

4. Vorrichtung nach Anspruch 3, **dadurch gekennzeichnet, dass** die Korrekturmittel Skalierungsmittel (68) umfassen, die eingangsseitig das aus der Addition der Vorpositionierung oder Vorwegnahme und des Ausgangssignals der Anpassmittel (62) resultierende Signal empfangen und das Signal (46) zur Ansteuerung der Betätigungseinrichtung (24) erzeugen.

5. Vorrichtung nach einem der Ansprüche 2 bis 4, **dadurch gekennzeichnet, dass** die Parameter der Filter- und Skalierungsmittel (58, 60, 68) der Korrekturmittel durch die vorgenannten Mittel (54) definiert werden.

6. Vorrichtung nach einem der Ansprüche 1 bis 5, **dadurch gekennzeichnet, dass** die Abgleichmittel (54) eingangsseitig Messwerte für physikalische Größen (56), die das dynamische Ansprechen und die Präzision der Betätigungseinrichtung (24) verändern, den Messwert (52) der physikalischen Größe für die Ansteuerung der Kupplung und das Signal (46) zur Ansteuerung der Betätigungseinrichtung (24) empfangen.

7. Vorrichtung nach einem der vorangehenden Ansprüche, **dadurch gekennzeichnet, dass** die Abgleichmittel (54) Mittel zur Berechnung der Parameter eines mathematischen Modells der Betätigungseinrichtung und Mittel zur Anpassung der Parameter der Komponenten der Korrekturmittel an das tatsächliche Verhalten der Betätigungseinrichtung umfassen.

8. Vorrichtung nach Anspruch 7, **dadurch gekennzeichnet, dass** die Abgleichmittel (54) einen Speicher umfassen, in dem Wertetabellen der Parameter der Komponenten der vorgenannten Korrekturmittel und Auswahlmittel zum Auswählen aus diesen Parameterwertetabellen abgespeichert sind, die jeweils am besten auf das tatsächliche Verhalten der Betätigungseinrichtung (24) abgestimmte Korrekturmittel definieren.

## Claims

1. Piloted adaptive device for coupling between an engine and a gear box in a motor vehicle, this device comprising a clutch (14), an actuator (24) to control the clutch, and means to control the actuator (24) comprising a transmission monitoring module (30) which implements strategies for handling of driving comfort which pilot the coupling of the clutch and the speed and/or coupling of the engine, such as to compensate for the variability of the dynamic behaviour of the engine, the gear box and the remainder of the vehicle, the monitoring module (30) generating a signal (40) for piloting and/or command of means (32) for control of the engine, and a signal (42) for control of the torque to be transmitted, a module (28) for piloting the torque of the clutch which gives rise to a command value (44) for a physical control value of the clutch based on the command of the torque to be transmitted (42), which command is provided by the monitoring module (30) and physical values which are measured on the engine, the gear box and the remainder of the vehicle, **characterised in that** the device comprises a module (26) for piloting the actuator (24) of the clutch, which receives the command value (44) determined by the module (28) for piloting of the clutch and signals (34) measured on the engine, the gear box and the remainder of the vehicle, and generating a signal (46) for control of the actuator (24), and **in that** the module (26) for piloting of the actuator comprises correction means (50, 58, 62, 64, 66, 68) which determine a value of the signal (46) for control of the actuator, which makes it possible to eliminate in a minimum time the difference between the command value (44) of the physical value for control of the clutch, and a measurement (52) of this physical value, and means (54) for adjustment of the parameters of the correction means according to variations of physical environment values (56), such as the temperature and/or an electrical supply voltage, and phenomena such as the ageing and wear of the actuator and of the clutch control.

2. Device according to claim 1, **characterised in that** the correction means comprise means (58, 60) for filtering and scaling of the command (44) and measurement (52) value of the physical value for the control of the clutch, which are connected to a comparator (50) which determines the difference between the command (44) and measurement (52) value, and adapter means (62) which receive the difference signal which is provided by the comparator (50), and modifies it in accordance with the output signals of the aforementioned adjustment means (54) .

3. Device according to claim 2, **characterised in that** the correction means also comprise means (66) for calculation of pre-positioning or anticipation of the signal (46) for control of the actuator (24), these calculation means (66) being connected at the input to the aforementioned adjustment means (54) and receiving the command value (44) in order to generate a pre-positioning or anticipation of control, which is added to the signal output from the aforementioned adapter means (62).

4. Device according to claim 3, **characterised in that** the correction means comprise scaling means (68) which receive as input the signal obtained from addition of the prepositioning or anticipation and of the output signal of the adapter means (62), and generate the signal (46) for control of the actuator (24).

5. Device according to one of claims 2 to 4, **characterised in that** the parameters of the filtering and scaling means (58, 60, 68) of the correction means are defined by the aforementioned means (54).

6. Device according to one of claims 1 to 5, **characterised in that** the adjustment means (54) receive as input measurements of physical values (56) which modify the dynamic response and precision of the actuator (24), the measurement (52) of the physical control value of the clutch and the signal (46) for control of the actuator (24).

7. Device according to one of the aforementioned claims, **characterised in that** the adjustment means (54) comprise means for calculation of the parameters of a mathematical model of the actuator and means for adaptation of the parameters of the components of the means for correction of the real behaviour of the actuator.

8. Device according to claim 7, **characterised in that** the adjustment means (54) comprise a memory in which there are recorded tables of values of the parameters of the components of the aforementioned correction means, and means for selection from these tables of the parameter values which define the correction means which are best suited to the real behaviour of the actuator (24).
